# EUROPÄISCHE PATENTSCHRIFT

(11) **EP 2 781 291 B1**
(45) Veröffentlichungstag und Bekanntmachung des Hinweises auf die Patenterteilung: **28.10.2015**
(21) Anmeldenummer: 13160679.0
(22) Anmeldetag: 22.03.2013
(51) Int. Cl.: B23K 9/133

(54) **Vorrichtung zum Zuführen eines Schweißdrahts zu einer Schweißeinrichtung**
Device for feeding a welding wire to a welding device
Dispositif permettant d'acheminer un fil de soudage jusqu'à un dispositif de soudage

(43) Veröffentlichungstag der Anmeldung: 24.09.2014
(73) Patentinhaber: Plasch, Siegfried, 4600 Wels (AT)
(72) Erfinder: Plasch, Siegfried, 4600 Wels (AT)
(74) Vertreter: Jell, Friedrich

(56) Entgegenhaltungen:
- EP-A2- 1 080 818
- AU-B2- 774 255
- GB-A- 2 368 319

## Beschreibung

Die Erfindung betrifft eine Vorrichtung zum Zuführen eines Schweißdrahts zu einer Schweißeinrichtung, mit einer Schlittenführung, mit einem auf der Schlittenführung, insbesondere linear, entlang einer Schlittenachse beweglich gelagerten Schlitten, mit einem Vorschubantrieb , der eine am Schlitten vorgesehene und angetriebene Vorschubeinrichtung für eine Vorschubbewegung des Schweißdrahts aufweist, und mit einem Schlittenantrieb, der einen Antrieb, einen vom Antrieb angetriebenen Exzenter und eine am Exzenter exzentrisch gelagerte Exzenterstange aufweist, die mit dem Schlitten für eine vor- und zurückgehenden Schlittenbewegung mechanisch gekoppelt ist, wobei der Schlittenantrieb Mittel zur Veränderung des Hubs der vorund zurückgehenden Bewegung des Schlittens aufweist.

Um den Hub (Spitze-Spitze) einer Vor- und Zurück-Bewegung bzw. Pendelhubbewegung eines Schweißdrahts einstellen zu können, ist aus dem Stand der Technik eine Vorrichtung mit einem Schlittenantrieb bekannt (EP1080818A2), bei der die Exzentrizität seines Exzenters verändert werden kann. Hierzu ist die Exzenterstange manuell von einer Lagerstelle am Exzenter in eine andere Lagerstelle am Exzenter zu verändern. Nachteilig bedarf es für solch eine positionsveränderbare Lagerstelle am Exzenter eines vergleichsweise hohen konstruktiven Aufwands, wenn vom Exzenter hohe Drehzahlen des Antriebs umgesetzt werden müssen und damit vergleichsweise große mechanische Belastungen auf den Exzenter bzw. die Exzenterstange wirken.

Es ist daher Aufgabe der Erfindung, eine Vorrichtung zum Zuführen eines eine vorund zurückgehende Bewegung aufweisenden Schweißdrahts derart konstruktiv einfach und somit kostengünstig auszugestalten, dass selbst bei stufenfreier Hubverstellung standfest eine hochfrequente Vor- und Zurückbewegung des Schweißdrahts ermöglicht wird.

Die Erfindung löst die gestellte Aufgabe dadurch, dass der Schlittenantrieb als Mittel zur Veränderung des Hubs der vor- und zurückgehenden Schlittenbewegung eine Führung aufweist, die wenigstens den Exzenter auf einer zur Schlittenachse der Schlittenführung geneigt verlaufenden Führungsachse verstellbar lagert.

Weist der Schlittenantrieb als Mittel zur Veränderung des Hubs der vor- und zurückgehenden Schlittenbewegung eine Führung auf, die wenigstens den Exzenter auf einer zur Schlittenachse der Schlittenführung geneigt verlaufenden Führungsachse verstellbar lagert, kann sich auf konstruktiv einfache und damit kostengünstig Weise eine stufenlose Verstellbarkeit des Hubs der Vor- und Zurückbewegung des Schweißdrahts ergeben. Zudem fordert diese stufenlose Verstellbarkeit auch keine konstruktiven Änderungen an der Exzentrizität des Exzenters. Somit können auch jene Teilbereiche des Vorschubantriebs konstruktiv unangetastet bleiben, die vergleichsweise hohen mechanischen Belastungen ausgesetzt sind, um eine vor- und zurückgehende Schlittenbewegung zu erzeugen. Unter Ausnutzung der Führungsverstellung des Exzenters kann nun eine fixe Lagerstelle der Exzenterstange am Exzenter ausreichen und damit eine äußerst belastbare Kopplung des Schlittens mit der Exzenterstange sicherstellen. Damit kann trotz stufenfreier Hubverstellung standfest eine hochfrequente Vor- und Zurückbewegung des Schweißdrahts ermöglicht werden. Beispielsweise kann damit ein Frequenzbereich von 5 bis 40 Herz mit einem Hub von 2 bis 10 Millimeter möglich werden. Außerdem ist eine Lageverstellung des Exzenters gegenüber der Schlittenachse vergleichsweise einfach handzuhaben, was die Bedienungsfreundlichkeit der Vorrichtung weiter verbessert.

Lagert die Führung Antrieb und Exzenter auf einer zur Schlittenachse der Schlittenführung geneigt verlaufenden Führungsachse verstellbar, kann der konstruktive Aufwand des Antriebsverbunds zwischen Antrieb und Exzenter vereinfacht werden. Außerdem können damit konstruktiv bedingte Einschränkungen in der Bewegungsfreiheit des Exzenters gegenüber dem Antrieb ausgeschlossen werden. Dies kann unter anderem zur Erhöhung der Variabilität im einstellbaren Hub der Vor- und Zurückbewegung des Schlittens dienen.

Die Vorrichtung kann konstruktiv weiter vereinfacht werden, wenn Antrieb und Exzenter eine gemeinsame Baugruppe ausbilden. Zudem kann diese Baugruppe für eine vergleichsweise hohe Verwindungssteifigkeit sorgen, um standfest hochfrequente Vor- und Zurückbewegungen am Schlitten zu erzeugen.

Verläuft die Führungsachse der linearen Führung senkrecht zur Schlittenachse der Schlittenführung, können Vorteile hinsichtlich geringem Konstruktionsaufwand und kostengünstiger Herstellung einer Linearführung genutzt werden.

Weist der Antrieb einen Motor, insbesondere Elektromotor, und ein mit Motor verbundenes Riemengetriebe auf, dessen Riemen mit dem Exzenter verbunden ist, kann die Standfestigkeit der Vorrichtung erheblich erhöht werden. Das Riemengetriebe kann nämlich für eine mechanische Entlastung des Motors gegenüber, auf den Exzenter einwirkenden Stoßbelastungen sorgen.

Eine vergleichsweise hohe Steifigkeit im Antriebstrang kann erreicht werden, wenn der Riemen als Zahnriemen ausgeführt ist, der im Eingriff mit der Verzahnung des Exzenters steht.

Um die Ruheposition des Schlittens auf der Schlittenführung trotz Lageverstellung des Exzenters beibehalten zu können, kann vorgesehen sein, dass die Exzenterstange in ihrer Länge verstellbar ausgeführt ist.

Weist die Vorrichtung einen Träger auf, auf dem die Schlittenführung und die Führung befestigt sind, kann sich der Schlittenantrieb über den Träger zur Schlittenführung mechanisch abstützen, was selbst bei hochfrequenten Vor- und Zurückbewegung für eine vergleichsweise hohe Laufruhe des Schlittenantriebs sorgen kann. Weist die Vorrichtung einen Träger und der Vorschubantrieb einen am Träger befestigten Motor auf, der mit der am Schlitten vorgesehenen Vorschubeinrichtung antriebsverbunden ist, können die Gewichtsbelastung des Schlittens reduziert und die mechanischen Belastungen auf den Schlittenantrieb somit verringert werden. Auf diese Weise können sich konstruktive Vereinfachungen am Schlittenantrieb ergeben. Zudem kann die Standfestigkeit des Vorschubantriebs gegenüber den mechanischen Belastungen einer hochfrequenten Vor- und Zurückbewegung des Schlittens erhöht werden.

Der Motor des Vorschubantriebs kann von mechanischen Schwingungen am Antriebstrang entkoppelt werden, wenn der Motor über ein Getriebe, insbesondere Riemengetriebe, mit der Vorschubeinrichtung antriebsverbunden ist.

Weist das Getriebe eine Spannrolle auf, kann eine unerwünschte Verspannung im Antriebstrang des Vorschubantriebs ausgeglichen werden, die sich durch eine Verlagerungen des Schlittens an der Schlittenführung ergeben kann. Die Gefahr eines Getriebeschadens kann damit verringert bzw. die Standfestigkeit der Vorrichtung erhöht werden.

Konstruktive Vereinfachungen am Vorschubantrieb können erreicht werden, wenn das Getriebe einen Zahnriemen aufweist.

Eine genaue und reproduzierbare konstante Vorschubbewegung kann ermöglicht werden, indem die Vorschubeinrichtung wenigstens ein Paar an angetriebenen Treibrollen aufweist, die die den Schweißdraht zu dessen Vorschubbewegung zwischen einander führen.

In den Figuren ist beispielsweise der Erfindungsgegenstand anhand eines Ausführungsbeispiels näher dargestellt. Es zeigen
- Fig. 1: eine vereinfacht dargestellte Seitenansicht der erfindungsgemäßen Vorrichtung und
- Fig. 2: eine teilweise aufgerissene Ansicht nach II-II der Fig. 1.

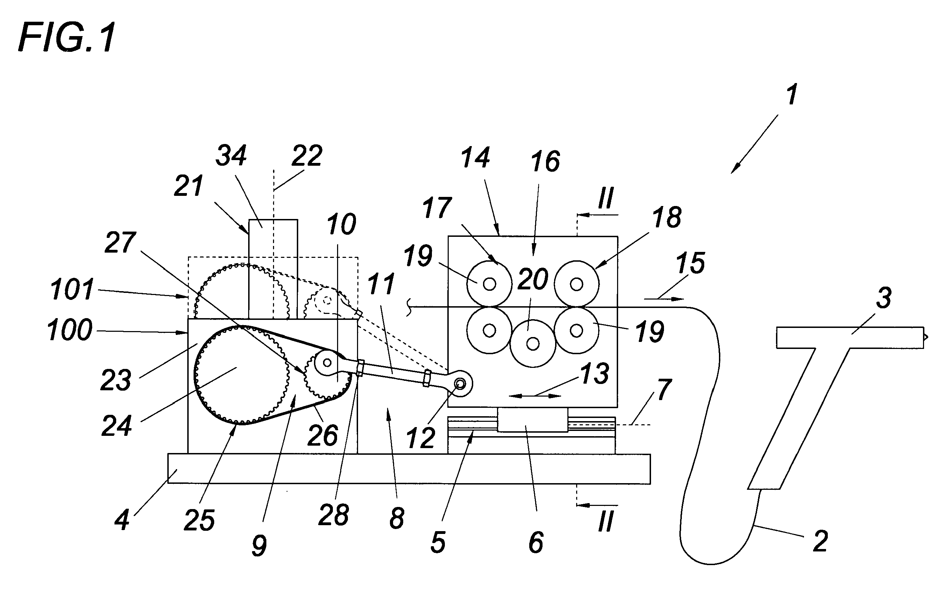

Gemäß der nach Fig. 1 dargestellten Vorrichtung 1 erfüllt den Zweck des Zuführens eines Schweißdrahts 2 zu einer Schweißeinrichtung 3. Die Vorrichtung 1 weist hierzu einen Träger 4 auf, der als Fundament der Vorrichtung 1 dient. Auf diesem Träger 4 ist eine Schlittenführung 5 befestigt. Diese Schlittenführung 5 lagert einen Schlitten 6 beweglich entlang einer Schlittenachse 7. Der Schlitten 6 wird mit Hilfe eines Schlittenantriebs 8 bewegt. Dafür ist dem Schlittenantrieb 8 ein Antrieb 9, ein vom Antrieb 9 angetriebener Exzenter 10 und eine am Exzenter 10 exzentrisch gelagerte Exzenterstange 11 zugeordnet, die mit dem Schlitten 4 mechanisch über ein Lager 12 gekoppelt ist. Bei rotierendem Exzenter 10 wird dem Schlitten 6 eine vorund zurückgehende Bewegung 13 aufgezwungen. Diese vor- und zurückgehende Schlittenbewegung 13 überträgt sich auf den Schweißdraht 3, dem von einer Vorschubantrieb 14 eine kontinuierliche Vorschubbewegung 15 aufgezwungen wird. Damit kann die Vorschubbewegung 15 des Schweißdrahts 3 mit einer vor- und zurückgehenden Bewegung 13 überlagert werden. Die Vorschubeinrichtung 16 des Vorschubantriebs 14 ist am Schlitten 6 vorgesehen und weist zwei Paare 17, 18 an angetriebenen Treibrollen 19 auf, die zwischen einander den Schweißdraht 2 für dessen Vorschubbewegung 15 klemmen bzw. damit führen. Über die Umdrehungszahl des Antriebsrads 20, das sich mit dem Treibrollen 19 kämmt, ist der Vorschub des Schweißdrahts 3 einstellbar.

Zudem ist der Hub (Maß für Höhe der Auslenkung vom niedrigsten Wert bis zum höchsten Wert eines periodischen Vorgangs) der vor- und zurückgehenden Schlittenbewegung 13 einstellbar. Erfindungsgemäß wird dies durch Maßnahmen am Schlittenantrieb 8 erreicht, indem diesem als Mittel eine Führung 21 zugeordnet wird. Mit Hilfe dieser Führung 21 ist der Exzenter 10 auf einer zur Schlittenachse 7 der Schlittenführung 5 geneigt, im Ausführungsbeispiel senkrecht, verlaufenden Führungsachse 22 verstellbar gelagert. Damit kann die vom Exzenter 10 vorgegebene Exzentrizität mit veränderter Wirkung über die Exzenterstange 11 auf den Schlitten 6 übertragen werden, was den Hub der vor- und zurückgehenden Schlittenbewegung 13 verändert, ohne dass eine Änderung am Exzenterantrieb vorgenommen werden muss, wie dies am Vergleich der durchgezogenen Ruhelage 100 des Schlittenantriebs 8 mit der strichliert gezeichneten Verstelllage 101 des Schlittenantriebs 8 nach Fig. 1 erkannt werden kann. Aufwändige Maßnahmen im Bereich höchster mechanischer Beanspruchungen können damit unterbleiben und trotzdem eine hohe Standfestigkeit der Vorrichtung 1 selbst bei hochfrequenter vor- und zurückgehender Schlittenbewegung 13 führt.

Wie der Fig. 1 weiter zu entnehmen, sind Antrieb 9 und Exzenter 10 zu einer Baugruppe 23 zusammengefasst, wodurch die Führung 21 zusammen Antrieb 9 und Exzenter 10 auf einer zur Schlittenachse 7 der Schlittenführung 5 geneigt verlaufende Führungsachse 22 verstellbar lagert. So ist die Lageänderung einer Baugruppe 23 also einfach durchzuführen. Zum Zwecke besonders einfacher Konstruktionsbedingungen an der Führung 21 verläuft deren lineare Führungsachse 22 gemäß Fig. 1 senkrecht zur Schlittenachse 7 der Schlittenführung 5.

Um Erschütterungen bzw. Impulsbelastungen vom elektrischen Motor 24 des Antriebs 9 fernzuhalten bzw. diese abzumildern, ist ein Riemengetriebe 25 vorgesehen, das den Motor 24 mit dem Exzenter 10 über einen Zahnriemen 26 antriebsverbindet. Konstruktiv einfach gelöst, weist hierfür der Exzenter selbst eine Verzahnung 27 auf, die im Eingriff mit dem Zahnriemen 26 steht.

Die Exzenterstange 11 ist über Schraubmuttern 28 in ihrer Länge verstellbar ausgeführt. Damit kann eine Verschiebung der Ruhelage des Schlittens 6 auf der Schlittenführung 5 korrigiert werden, die bei enger Änderung der Lage des Schlittenantriebs 8 auftreten kann.

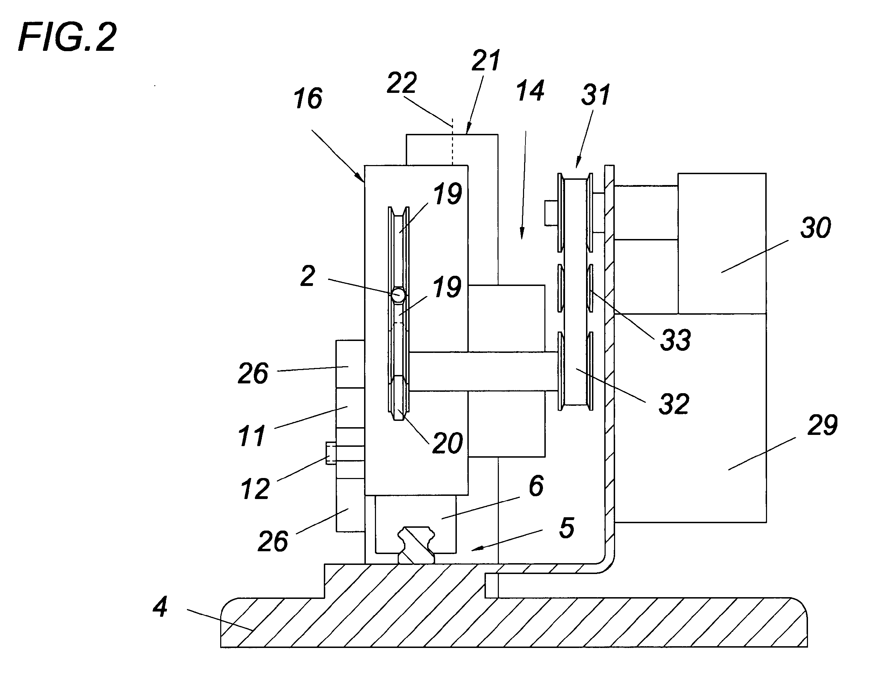

Wie nach Fig. 1 und 2 zu erkennen, ist auch die Führung 21 am Träger 4 befestigt, sodass sich Schlittenantrieb 8 und Schlittenführung 5 über den Träger 4 gegenseitig abstützen können.

Nach Fig. 2 ist der Antriebsstrang des Vorschubantriebs 14 näher dargestellt. Erfindungsgemäß bedarf der Vorschubantrieb 14 verminderter Konstruktionserfordernisse am Schlitten 6. Dies unter anderem dadurch, dass der Motor 29 des Vorschubantriebs 14 am Träger 4 befestigt ist, was zudem den Schlitten 6 entlastet. Dies führt in weiterer Folge zur Entlastung der Mechanik des Schlittenantriebs 8. Die erfindungsgemäße Vorrichtung 1 kann daher einer hochfrequent vor- und zurückgehenden Bewegungen 13 sicher standhalten.

Der Motor 29 ist über ein Winkelgetriebe 30 mit einem als Riemengetriebe ausgeführten Getriebe 31 verbunden, das das Antriebsrad 20 der am Schlitten 6 vorgesehenen Vorschubeinrichtung 16 antreibt, um damit für eine Vorschubbewegung des Schweißdrahts 2 zu sorgen.

Das Getriebe 31 weist ebenso einen Zahnriemen 32 auf. Zudem ist dem Getriebe 31 eine Spannrolle 33 zugeordnet, um die Abstandsveränderungen zwischen Motor 29 und dem vor- und zurückgehenden Schlitten 6 ausgleichen zu können.

Wie nach Fig. 1 dargestellt, weist die lineare Führung 21 eine Führungsschiene 34 als Führungselement auf, auf dem die Baugruppe 23 verstellbar geführt ist.

## Patentansprüche

1. Vorrichtung zum Zuführen eines Schweißdrahts (2) zu einer Schweißeinrichtung (3), mit einer Schlittenführung (5), mit einem auf der Schlittenführung (5), insbesondere linear, entlang einer Schlittenachse (7) beweglich gelagerten Schlitten (6), mit einem Vorschubantrieb (14), der eine am Schlitten (6) vorgesehene und angetriebene Vorschubeinrichtung (16) für eine Vorschubbewegung des Schweißdrahts (2) aufweist, und mit einem Schlittenantrieb (8), der einen Antrieb (9), einen vom Antrieb (9) angetriebenen Exzenter (10) und eine am Exzenter (10) exzentrisch gelagerte Exzenterstange (11) aufweist, die mit dem Schlitten (6) für eine vor- und zurückgehende Schlittenbewegung (13) mechanisch gekoppelt ist, wobei der Schlittenantrieb (8) Mittel zur Veränderung des Hubs der vor- und zurückgehende Bewegung (13) des Schlittens (6) aufweist, **dadurch gekennzeichnet, dass** der Schlittenantrieb (8) als Mittel zur Veränderung des Hubs der vor- und zurückgehenden Schlittenbewegung (13) eine Führung (21) aufweist, die wenigstens den Exzenter (10) auf einer zur Schlittenachse (7) der Schlittenführung (5) geneigt verlaufenden Führungsachse (22) verstellbar lagert.

2. Vorrichtung nach Anspruch 1, **dadurch gekennzeichnet, dass** die Führung (21) Antrieb (9) und Exzenter (10) auf einer zur Schlittenachse (7) der Schlittenführung (5) geneigt verlaufenden Führungsachse (22) verstellbar lagert.

3. Vorrichtung nach Anspruch 2, **dadurch gekennzeichnet, dass** Antrieb (9) und Exzenter (10) eine Baugruppe (23) ausbilden.

4. Vorrichtung nach Anspruch 1, 2 oder 3, **dadurch gekennzeichnet, dass** die Führungsachse (22) der linearen Führung (21) senkrecht zur Schlittenachse (7) der Schlittenführung (5) verläuft.

5. Vorrichtung nach einem der Ansprüche 1 bis 4, **dadurch gekennzeichnet, dass** der Antrieb (9) einen Motor (24) und ein mit dem Motor (24) verbundenes Riemengetriebe (25) aufweist, dessen Riemen (26) mit dem Exzenter (10) verbunden ist.

6. Vorrichtung nach Anspruch 5, **dadurch gekennzeichnet, dass** der Riemen (26) als Zahnriemen ausgeführt ist, der im Eingriff mit der Verzahnung (27) des Exzenters (10) steht.

7. Vorrichtung nach einem der Ansprüche 1 bis 6, **dadurch gekennzeichnet, dass** die Exzenterstange (11) in ihrer Länge verstellbar ausgeführt ist.

8. Vorrichtung nach einem der Ansprüche 1 bis 7, **dadurch gekennzeichnet, dass** die Vorrichtung einen Träger (4) aufweist, auf dem die Schlittenführung (5) und die Führung (21) befestigt sind.

9. Vorrichtung nach einem der Ansprüche 1 bis 8, **dadurch gekennzeichnet, dass** die Vorrichtung einen Träger (4) und der Vorschubantrieb (14) einen am Träger (4) befestigten Motor (29) aufweist, der mit der am Schlitten (6) vorgesehenen Vorschubeinrichtung (16) antriebsverbunden ist.

10. Vorrichtung nach Anspruch 9, **dadurch gekennzeichnet, dass** der Motor (29) über ein Getriebe (31), insbesondere Riemengetriebe, mit der Vorschubeinrichtung (16) antriebsverbunden ist.

11. Vorrichtung nach Anspruch 10, **dadurch gekennzeichnet, dass** das Getriebe (31) eine Spannrolle (33) aufweist.

12. Vorrichtung nach Anspruch 10 oder 11, **dadurch gekennzeichnet, dass** das Getriebe (31) einen Zahnriemen (32) aufweist.

13. Vorrichtung nach einem der Ansprüche 1 bis 12, **dadurch gekennzeichnet, dass** die Vorschubeinrichtung (16) wenigstens ein Paar (17, 18) an angetriebenen Treibrollen (19) aufweist, die den Schweißdraht (2) zu dessen Vorschubbewegung zwischen einander führen.

## Claims

1. Apparatus for feeding a welding wire (2) to a welding device (3), comprising a carriage guide (5), a carriage (6) which is movably mounted on the carriage guide (5), especially linearly, along a carriage axis (7), a feed drive (14) having a driven feed device (16) provided on the carriage (6) for a feeding movement of the welding wire (2), and a carriage drive (8) having a drive (9), an eccentric (10) driven by the drive (9), and an eccentric rod (11) which is eccentrically mounted on the eccentric (10) and which is mechanically coupled to the carriage (6) for an advancing and retracting carriage movement (13), wherein the carriage drive (8) comprises means for changing the lift of the advancing and retracting movement (13) of the carriage (6), **characterized in that** the carriage drive (8) comprises a guide (21) as a means for changing the lift of the advancing and retracting carriage movement (13), which guide adjustably mounts at least the eccentric (10) on a guide axis (22) which extends in an inclined manner in relation to the carriage axis (7) of the carriage guide (5).

2. An apparatus according to claim 1, **characterized in that** the guide (21) adjustably mounts the drive (9) and eccentric (10) on a guide axis (22) extending in an inclined manner in relation to the carriage axis (7) of the carriage guide (5).

3. An apparatus according to claim 2, **characterized in that** the drive (9) and the eccentric (10) form an assembly (23).

4. An apparatus according to claim 1, 2 or 3, **characterized in that** the guide axis (22) of the linear guide (21) extends perpendicularly to the carriage axis (7) of the carriage guide (5).

5. An apparatus according to one of the claims 1 to 4, **characterized in that** the drive (9) comprises a motor (24) and a belt drive (25), which is connected to the motor (24) and whose belt (26) is connected to the eccentric (10).

6. An apparatus according to claim 5, **characterized in that** the belt (26) is formed as a toothed belt which is in engagement with the toothing (27) of the eccentric (10).

7. An apparatus according to one of the claims 1 to 6, **characterized in that** the eccentric rod (11) is formed to be adjustable in its length.

8. An apparatus according to one of the claims 1 to 7, **characterized in that** the apparatus comprises a support (4) on which the carriage guide (5) and the guide (21) are fastened.

9. An apparatus according to one of the claims 1 to 8, **characterized in that** the apparatus comprises a support (4) and the feed drive (14) comprises a motor (29) fixed to the support (4), said motor being drive-connected to the feed device (16) provided on the carriage (6).

10. An apparatus according to claim 9, **characterized in that** the motor (29) is drive-connected via a gear (31), especially a belt gear, to the feed device (16).

11. An apparatus according to claim 10, **characterized in that** the gear (31) comprises a tension pulley (33).

12. An apparatus according to claim 10 or 11, **characterized in that** the gear (31) comprises a toothed belt (32).

13. An apparatus according to one of the claims 1 to 12, **characterized in that** the feed device (16) comprises at least one pair (17, 18) of driven driving pulleys (19) which guide the welding wire (2) between each other for its feeding movement.

## Revendications

1. Dispositif pour amener un fil de soudure (2) vers une installation de soudage (3), avec un guidage de chariot (5), avec un chariot (6) supporté sur le guidage de chariot (5) de façon à pouvoir se déplacer, en particulier de manière linéaire, le long d'un axe de chariot (7), avec un entraînement d'avancement (14) qui présente une installation d'avancement (16) prévue sur le chariot (6) et entraînée pour un mouvement d'avancement du fil de soudure (2), et avec un entraînement de chariot (8) qui présente un entraînement (9), un excentrique (10) entraîné par l'entraînement (9) et une tringle d'excentrique (11) supportée de façon excentrée sur l'excentrique (10) et qui est couplée mécaniquement au chariot (6) en vue d'un mouvement de va-et-vient du chariot (13), l'entraînement de chariot (8) présentant des moyens pour modifier la course du mouvement de va-et-vient (13) du chariot (6), **caractérisé en ce que** l'entraînement de chariot (8) présente comme moyens pour modifier la course du mouvement de va-et-vient du chariot (13) un guidage (21) qui supporte au moins l'excentrique (10) sur un axe de guidage (22) incliné par rapport à un axe de chariot (7) du guidage de chariot (5).

2. Dispositif selon la revendication 1, **caractérisé en ce que** le guidage (21) supporte l'entraînement (9) et l'excentrique (10) sur un axe de guidage (22) incliné par rapport à un axe de chariot (7) du guidage de chariot (5).

3. Dispositif selon la revendication 2, **caractérisé en ce que** l'entraînement (9) et l'excentrique (10) forment un sous-ensemble (23).

4. Dispositif selon la revendication 1, 2 ou 3, **caractérisé en ce que** l'axe de guidage (22) du guidage linéaire (21) est perpendiculaire à l'axe de chariot (7) du guidage de chariot (5).

5. Dispositif selon l'une des revendications 1 à 4, **caractérisé en ce que** l'entraînement (9) présente un moteur (24) et une transmission à courroie (25) reliée au moteur (24), dont la courroie (26) est reliée à l'excentrique (10).

6. Dispositif selon la revendication 5, **caractérisé en ce que** la courroie (26) est conçue comme une courroie dentée qui est en prise avec la denture (27) de l'excentrique (10).

7. Dispositif selon l'une des revendications 1 à 6, **caractérisé en ce que** la tringle d'excentrique (11) est conçue de façon à être modifiable en longueur.

8. Dispositif selon l'une des revendications 1 à 7, **caractérisé en ce que** le dispositif comporte un support (4) sur lequel le guidage de chariot (5) et le guidage (21) sont fixés.

9. Dispositif selon l'une des revendications 1 à 8, **caractérisé en ce que** le dispositif comporte un support (4) et l'entraînement d'avancement (14) comporte un moteur (29) fixé sur le support (4), qui est en liaison pour l'entraînement avec un dispositif d'avancement (16) prévu sur le chariot (6).

10. Dispositif selon la revendication 9, **caractérisé en ce que** le moteur (29) est relié en vue de l'entraînement au dispositif d'avancement (16) par une transmission (31), en particulier une transmission à courroie.

11. Dispositif selon la revendication 10, **caractérisé en ce que** la transmission (31) comporte un rouleau tendeur (33).

12. Dispositif selon la revendication 10 ou 11, **caractérisé en ce que** la transmission (31) comporte une courroie dentée (32).

13. Dispositif selon l'une des revendications 1 à 12, **caractérisé en ce que** le dispositif d'avancement (16) comporte au moins une paire (17, 18) de galets moteurs (19) entraînés qui guident le fil de soudure (2) entre eux pour le faire avancer.
